Europäisches Patentamt

(19) European Patent Office

Office européen des brevets

(11) Numéro de publication : **0 231 015 B1**

(12) **FASCICULE DE BREVET EUROPEEN**

(45) Date de publication du fascicule du brevet :
05.06.91 Bulletin 91/23

(51) Int. Cl.⁵ : **H04Q 11/02,** H04B 10/24,
H04J 14/02

(21) Numéro de dépôt : **87101096.3**

(22) Date de dépôt : **27.01.87**

(54) **Dispositif de télécommunications photoniques cohérentes.**

(30) Priorité : 28.01.86 FR 8601161

(43) Date de publication de la demande :
05.08.87 Bulletin 87/32

(45) Mention de la délivrance du brevet :
05.06.91 Bulletin 91/23

(84) Etats contractants désignés :
AT BE CH DE ES FR GB GR IT LI LU NL SE

(56) Documents cités :
EP-A- 0 077 292
EP-A- 0 131 818
US-A- 3 864 521

(56) Documents cités :
NACHRICHTENTECHNISCHE ZEITSCHRIFT
N.T.Z., vol. 35, no. 11, novembre 1982, pages
686-689, Berlin, DE; C. BAACK et al.:
"Zukünftige Lichtträgerfrequenztechnik in
Glasfasernetzen"

(73) Titulaire : ALCATEL ALSTHOM COMPAGNIE
GENERALE D'ELECTRICITE
54, rue La Boétie
F-75382 Paris Cédex 08 (FR)

(72) Inventeur : Gabriagues, Jean-Michel
17 Place A. Carrel
F-78530 Buc (FR)

(74) Mandataire : Weinmiller, Jürgen et al
Lennéstrasse 9 Postfach 24
W-8133 Feldafing (DE)

## Description

La présente invention concerne un dispositif de télécommunications photoniques cohérentes.

Ce dispositif est d'un type comportant
- N postes d'abonnés comprenant chacun
  - un circuit émetteur capable de délivrer des signaux électriques d'émission,
  - un circuit d'appel capable de délivrer des signaux électriques d'appel des autres postes,
  - un générateur laser à semi-conducteur, capable de délivrer une onde optique d'émission,
  - un circuit d'alimentation électrique connecté à l'entrée du générateur laser, le circuit d'appel et le circuit émetteur étant reliés au circuit d'alimentation pour moduler l'onde optique d'émission respectivement par les signaux d'appel et les signaux d'émission,
  - un récepteur photoélectrique
  - et un circuit d'utilisation relié à la sortie électrique du récepteur,
- un répartiteur optique passif constitué par une matière transparente aux ondes optiques d'émission
- et N couples de fibres optiques reliés respectivement aux N postes, chaque couple relié à un poste comprenant une fibre optique reliée par une de ses extrémités à la sortie du générateur laser, et une autre fibre optique reliée par une de ses extrémités à l'entrée optique du récepteur photoélectrique et par son autre extrémité au répartiteur optique passif.

Un dispositif de ce type est décrit dans la demande de brevet français publié sous le numéro 2 472 889.

Dans chaque couple de fibres optiques de ce dispositif, la fibre dont une extrémité est reliée au générateur laser est connectée par son autre extrémité au répartiteur optique passif pour lui transmettre l'onde optique d'émission, tandis que l'autre fibre est une fibre optique de réception qui transmet une onde optique de réception du répartiteur optique passif au récepteur ; des fréquences optiques $F_1.....F_N$ ainsi que des fréquences de modulation $f_1...f_N$ sont affectées respectivement aux N postes d'abonnés ; le générateur laser de l'abonné p délivre ainsi une onde lumineuse d'émission de fréquence $F_p$, cette onde lumineuse étant modulée par la fréquence de modulation $f_n$ affectée à un autre abonné n avec lequel l'abonné p désire entrer en communication. De plus, le poste de l'abonné p comporte en outre
- N-1 filtres optiques ne laissant passer respectivement que les fréquences $F_1....F_{p-1}$, $F_{p+1}.....F_N$, ces filtres optiques étant disposés pour recevoir l'onde optique de réception transmise par la fibre optique de réception,

- N-1 détecteurs photoélectriques sélectifs recevant respectivement l'énergie optique sortant des N-1 filtres optiques, ces détecteurs ne délivrant un signal électrique que si l'amplitude de l'énergie lumineuse qu'ils reçoivent est modulée à la fréquence $F_N$,
- des moyens recevant les signaux électriques délivrés par les détecteurs sélectifs et capables de signaler à l'abonné p l'ordre n du filtre de fréquence $F_n$ dont le rayonnement de sortie a provoqué l'émission d'un signal électrique émis par le détecteur sélectif recevant ce rayonnement de sortie,
- un conducteur optique dont une extrémité est disposée sur la face d'entrée du récepteur photoélectrique
- et des moyens pour disposer l'autre extrémité du conducteur optique sur la sortie du filtre optique de fréquence $F_n$.

Ce dispositif de télécommunication présente l'inconvénient d'être difficile à utiliser lorsque le nombre N d'abonnés est élevé. En effet, il est nécessaire de prévoir dans ce cas un grand nombre de fréquences optiques différentes entre elles. De plus, le système récepteur de chaque abonné est encombrant et de réalisation délicate.

La présente invention a pour but de pallier cet inconvénient.

On connaît également, par la demande de brevet européen n° 0 077 292, un dispositif de télécommunication à fibres optiques, comprenant un central comportant une unité de référence à laser reliée aux installations d'émission et de réception qui sont munies de lasers accordables, un calculateur pour désigner des canaux de communication, la réception s'effectuant par hétérodynage.

Dans ce document, le contrôle de la fréquence des lasers par l'unité centrale est faite par des moyens électroniques.

Un autre but de l'invention est de réaliser une installation dans laquelle le contrôle du fonctionnement des lasers est purement optique.

L'invention a pour objet un dispositif de télécommunications photoniques cohérentes, du type mentionné précédemment, caractérisé en ce que, la fibre optique reliée au générateur laser étant une fibre de commande et l'autre fibre optique étant une fibre de communication,
- chaque poste comporte
  - des moyens pour maintenir la température du générateur laser à une valeur fixe prédéterminée,
  - un détecteur photoélectrique dont l'entrée optique est reliée à la fibre de commande
  - et un circuit de réglage dont l'entrée est reliée à la sortie électrique du détecteur photélectrique et dont une sortie est reliée au circuit d'alimentation du générateur laser, le circuit de réglage étant capable, lorsqu'il ne reçoit aucun signal sur son entrée, de régler le courant d'alimentaton du générateur laser de façon que l'onde optique d'émission ait une fréquence optique $f_A$, le circuit d'appel permettant de moduler l'onde optique d'émission de fréquence $f_A$ par les signaux d'appel d'un autre poste,

– le dispositif comporte en outre un standard comprenant,

• N détecteurs photoélectriques reliés respectivement aux N postes par les autres extrémités des N fibres optiques de commande, pour recevoir les ondes optiques d'émission modulées par les signaux d'appel,

• un ordinateur relié aux sorties électriques des N détecteurs de façon à recevoir les signaux d'appel provenant des différents postes, cet ordinateur étant capable de désigner, pour chaque communication demandée entre un poste appelant et un poste appelé, une fréquence optique $f_c$ disponible au moment de l'appel, choisie dans une liste prédéterminée de fréquences séparées l'une de l'autre par un intervalle de fréquence constant

• et N émetteurs laser monomodes dont les sorties sont reliées optiquement aux N fibres de commande provenant des N postes, chaque émetteur, étant muni de deux cavités couplées et étant disposé dans une enceinte maintenue à température constante, l'entrée électrique de chaque émetteur laser étant reliée à l'ordinateur à travers un circuit de commande, ce circuit étant capable, lorsque le poste relié à cet émetteur laser n'est pas en communication avec un autre poste, de régler la fréquence optique de l'émetteur laser à la valeur $f_A$, cette valeur étant réservée aux relations entre le standard et les N postes, les circuits de commande étant capables, lorsqu'une communication est demandée, de moduler la fréquence $f_A$ des émetteurs laser reliés aux postes appelant et appelé par des signaux représentatifs de la fréquence $f_c$ désignée par l'ordinateur pour cette communication, l'information de cette fréquence $f_c$ étant transmise par les fibres de commande aux détecteurs et aux circuits de réglage des postes appelant et appelé, ces circuits de réglage étant aptes à régler le courant d'alimentation des générateurs laser de ces postes de manière que la fréquence de leurs ondes optiques d'émission soit égale à $f_c$, les circuits de commande reliés aux postes appelant et appelé étant alors capables de régler à la valeur $f_c$ la fréquence des émetteurs laser reliés à ces postes, de sorte que les rayonnements de fréquence $f_c$ émis par ces émetteurs laser et transmis par les fibres de commande sont injectés dans la cavité des générateurs laser des postes appelant et appelé pour verrouiller leur fréquence d'émission à la valeur $f_c$

– et chaque poste comporte en outre

• des moyens pour relier optiquement la sortie du générateur laser à la fibre de communication, afin que cette fibre puisse transmettre au répartiteur optique passif l'onde optique d'émission de fréquence $f_c$ modulée par les signaux électriques d'émission,

• un oscillateur local constitué par un laser à semi-conducteur muni de moyens pour maintenir sa température à une valeur fixe prédéterminée,

• un circuit d'asservissement relié au circuit de réglage et à l'entrée électrique de l'oscillateur local, de façon à régler la fréquence d'émission de l'oscillateur local à une valeur $f_D$ voisine de $f_c$ lorsque le circuit de réglage reçoit l'information de la fréquence $f_c$ désignée par l'ordinateur pour une communication de ce poste avec un autre, la différence $f_d$-$f_c$ étant faible par rapport à l'intervalle entre deux fréquences successives de la liste prédéterminée de fréquences

• et des moyens pour relier optiquement la sortie de l'oscillateur local à l'entrée du récepteur photoélectrique, de façon à former un système de détection hétérodyne apte à capter les ondes optiques d'émission reçues par le répartiteur optique passif et transmises par la fibre de communication, la sortie électrique de ce système de détection hétérodyne étant reliée au circuit d'utilisaton.

Suivant un mode de réalisation du dispositif selon l'invention, chaque poste comporte en outre un isolateur branché en série dans la liaison entre la sortie du générateur laser et la fibre optique de communication.

Suivant un autre mode de réalisation du dispositif selon l'invention, le standard comporte en outre des isolateurs branchés chacun en série dans la liaison entre un émetteur laser et la fibre optique de commande.

Suivant un autre mode de réalisation du dispositif selon l'invention, chaque poste comporte un circuit d'alarme relié au circuit de réglage.

Suivant un autre mode de réalisation du dispositif selon l'invention, le circuit d'asservissement de chaque poste comporte un circuit de contrôle de fréquence relié à l'entrée électrique de l'oscillateur local, un circuit d'alimentation relié au circuit de contrôle de fréquence et au circuit de réglage, et un circuit discriminateur de fréquence relié au circuit de contrôle de fréquence et à la sortie électrique du récepteur.

Suivant un autre mode de réalisation du dispositif selon l'invention, chaque poste comporte en outre un circuit de décodage branché en série entre la sortie de son détecteur et le circuit de réglage.

Suivant un autre mode de réalisation du dispositif selon l'invention, le standard comporte en outre des circuits de décodage, chacun de ces circuits étant branchés en série entre un de ses détecteurs et l'ordinateur.

Suivant un autre mode de réalisation du dispositif selon l'invention, chaque poste comporte en outre un circuit de décodage branché en série entre la sortie du sytème de détection hétérodyne et le circuit d'utilisation.

Des formes particulières d'exécution de l'objet de la présente invention sont décrites ci-dessous, à titre d'exemple, en référence aux dessins annexés dans lesquels

    – la figure 1 représente schématiquement un mode de réalisation du dispositif selon l'invention,
    – la figure 2 montre la structure d'un circuit du dispositif illustré par la figure 1.

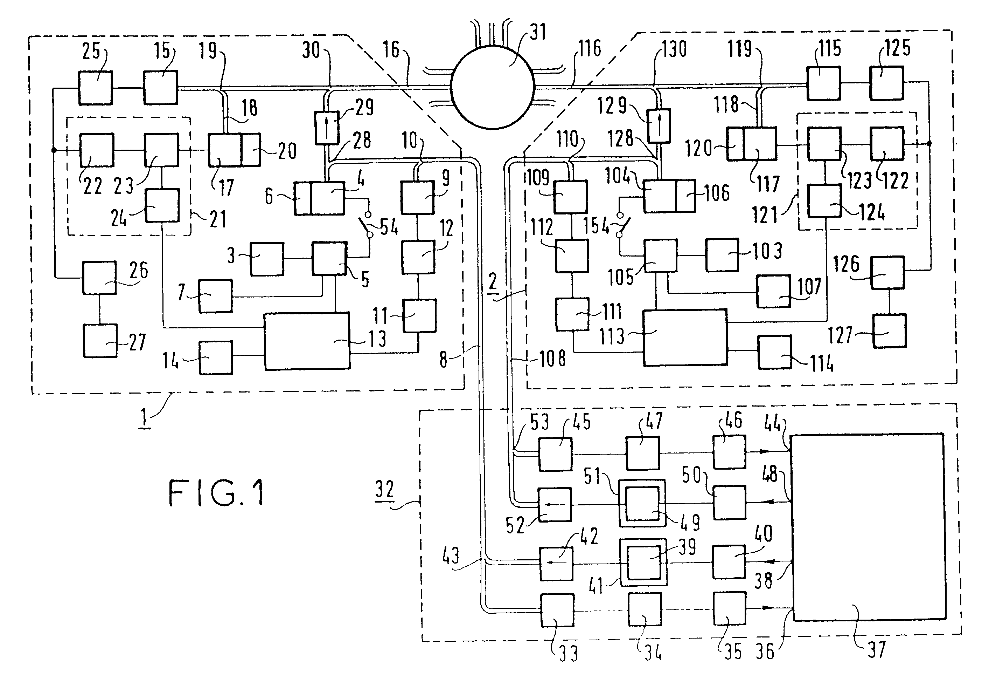

Sur la figure 1, est représenté un dispositif de télécommunication permettant de mettre en communication entre eux N abonnés. Chaque abonné possède un poste émetteur récepteur ; pour simplifier la figure seuls deux postes 1 et 2 ont été représentés.

Le poste 1 comporte un circuit émetteur 3 capable de délivrer des signaux électriques d'émission qui peuvent être des signaux téléphoniques ou vidéo. Le circuit 3 est connecté à un circuit d'alimentation 5 relié à l'entrée électrique d'un générateur laser à semi-conducteur 4 à travers un interrupteur 54. Le générateur laser 4 est muni d'un dispositif de stabilisation de température 6 connu en soi, par exemple du type à effet Peltier. Un circuit d'appel 7 est relié au circuit d'alimentation 5. La sortie du générateur laser 4 est couplée optiquement avec une extrémité d'une fibre optique 8.

Le poste 1 comporte en outre un détecteur photoélectrique 9 dont l'entrée optique est reliée à la fibre optique 8 à l'aide d'un coupleur 10. La sortie électrique du détecteur 9 est reliée à un circuit de décodage 11 à travers un amplificateur 12. Le circuit 11 est relié à l'entrée d'un circuit de réglage 13 dont une sortie est reliée au circuit d'alimentation 5 et une autre sortie est reliée à un circuit d'alarme 14.

Le poste 1 comporte de plus un récepteur photoélectrique 15 dont l'entrée optique est couplée à une extrémité d'une fibre optique 16. Un oscillateur local 17, constitué par un laser à semi-conducteur, est disposé à proximité du récepteur 15. La sortie de l'oscillateur 17 est reliée à l'entrée du récepteur 15 à travers un élément de fibre optique 18 et un coupleur 19 disposé sur la fibre 16. L'oscillateur local 17 est muni d'un dispositif de stabilisation de température 20 analogue au dispositif 6. Un circuit d'asservissement 21 est relié à l'entrée électrique de l'oscillateur local 17. Ce circuit d'asservissement comporte un discriminateur de fréquence 22 relié à l'entrée de l'oscillateur local 17 à travers un circuit de contrôle de fréquence 23, ce circuit 23 étant relié à une sortie du circuit de réglage 13 à travers un circuit d'alimentation 24. La sortie électrique du récepteur 15 est reliée à travers un amplificateur 25 à l'entrée d'un circuit de décodage 26, le circuit 22 étant relié à la liaison entre l'amplificateur 25 et le circuit 26. Un circuit d'utilisation 27 est connecté à la sortie du circuit 26.

La sortie du générateur laser 4 est reliée à la fibre optique 16 à travers successivement un coupleur 28 disposé sur la fibre 8, un isolateur 29 et un coupleur 30 disposé sur la fibre optique 16.

Le poste 2 est absolument identique au poste 1, et les éléments du poste 2 correspondant aux éléments 3 à 30 et 54 du poste 1 ont été désignés respectivement par les références 103 à 130 et 154.

Le dispositif représenté sur la figure 1 comporte un répartiteur optique passif 31, constitué par exemple par une sphère. Cette sphère peut être formée par une enveloppe contenant des éléments diffusants, remplie par un matériau transparent ayant un indice de réfraction proche de celui du coeur des fibres optiques. Ce matériau peut être par exemple de l'air. Les extrémités des fibres optiques telles que 16 ou 116, reliées à la fois au récepteur et aux générateurs laser des différents postes d'abonnés, sont raccordées par exemple par soudure sur l'enveloppe délimitant le répartiteur optique 31.

Le dispositif représenté sur la figure comporte en outre un standard central 32 à proximité duquel peut être disposé le répartiteur optique passif 31.

Ce standard est relié aux N postes d'abonnés par les fibres optiques telles que 8 connectées à la fois au générateur laser 4 et au détecteur 9 de chaque poste 1. Le standard 32 comporte un détecteur photoélectrique 33 dont l'entrée électrique est reliée à l'extrémité, opposée au poste 1, de la fibre 8. La sortie électrique du détecteur 33 est reliée, à travers un amplificateur 34 et un circuit de décodage 35 branchés en série, à une entrée 36 d'un ordinateur 37. Une sortie correspondant 38 de l'ordinateur 37 est reliée à l'entrée électrique d'un émetteur laser pilote 39 à travers un circuit de commande 40. L'émetteur laser pilote 39 est placé dans une enceinte 41 maintenue à température constante. La sortie optique de l'émetteur laser 39 est reliée, à travers un isolateur 42 et un coupleur 43, à la fibre optique 8. L'ordinateur 37 comporte N-1 autres couples d'entrée et de sortie, analogues au couple 36-38, et affectés aux relations entre l'ordinateur et les autres postes d'abonnés du dispositif. Sur la figure 1, seul un autre couple comprenant une entrée 44 et une sortie 48 a été représenté, ce couple étant affecté aux relations entre l'ordinateur et le poste 2. L'entrée 44 est reliée à un détecteur photoélectrique 45 à travers un circuit de décodage 46 et un amplificateur 47 branchés en série. La sortie 48 est reliée à un émetteur laser 49, placé dans une enceinte 51 à température constante, à travers un circuit de commande 50. La sortie de l'émetteur laser 49 est reliée à travers un isolateur 52 à l'extrémité libre de la fibre 108 à laquelle est reliée aussi l'entrée du détecteur 45 à travers un coupleur 53.

Le dispositif représenté sur la figure 1 fonctionne de la manière suivante.

Le générateur laser à semi-conducteur 4 est d'un type courant multimode longitudinal, chaque mode correspondant à une bande de fréquence dont la largeur est de l'orde de un gigahertz. Le dispositif 6 de stabilisation de température permet de maintenir la température du générateur laser 4 par exemple à 20°C, à 0,05°C près. Lorsque le titulaire du poste 1 désire entrer en communication avec celui du poste 2, il ferme l'interrupteur 54. Le circuit d'alimentation 5 règle alors le courant d'alimentation du générateur laser 4 avec une précision de 1mA. En l'absence de signaux électriques arrivant sur son entrée, le circuit de réglage 13 commande le circuit d'alimentation 5 de manière que la valeur du courant d'alimentation du générateur laser 4 soit telle que sa fréquence optique d'émission ait une valeur $f_A$ réservée aux relations entre les différents postes et le standard 32.

A chaque poste est affecté un numéro d'appel. Le titulaire du poste 1 désirant entrer en communication avec celui du poste 2 introduit le numéro d'appel du poste 2 dans le circuit d'appel 7. Ce circuit d'appel peut être par exemple du type à touches bien connu, utilisé dans les installations téléphoniques. Les signaux électriques d'appel délivrés par le circuit 7 modulent le courant d'alimentation du générateur laser 4 de manière à produire une modulation en intensité correspondante de l'onde optique d'émission.

Cette onde ainsi modulée est transmise par la fibre 8 au détecteur 33 du standard 32. Le détecteur 33 délivre ainsi les signaux électriques d'appel qui sont transmis à l'entrée 36 de l'ordinateur 37 après amplification et décodage par les circuits 34 et 35. L'ordinateur 37 traite les appels provenant des différents postes et désigne pour chaque communication demandée une fréquence porteuse optique différente. Il dispose d'une pluralité de fréquences optiques rangées suivant une liste prédéterminée. L'ordinateur 37 est informé de toutes les communications en cours et désigne par exemple la fréquence disponible de rang minimum. Dès réception des signaux d'appel du poste 1 pour une communication avec le poste 2, l'ordinateur désigne donc une fréquence optique $f_c$ pour cette communication.

L'ordinateur 37 délivre l'information de cette fréquence $f_c$ sous forme de signaux électriques à sa sortie 38 qui est associée à l'entrée 36 pour les relations du standard avec le poste 1. Ces signaux électriques sont transmis au circuit de commande 40.

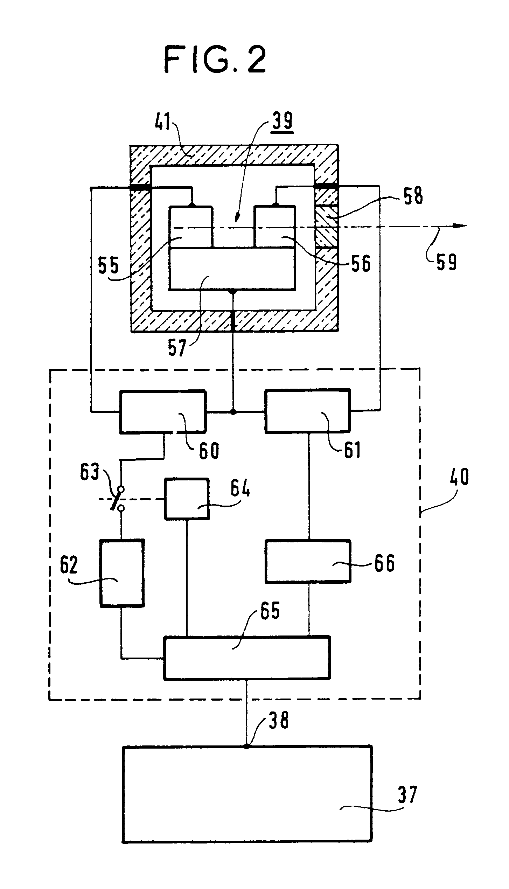

La figure 2 représente un schéma plus détaillé du circuit 40 et de l'émetteur laser 39.

L'émetteur laser à semi-conducteur 39 est du type à cavités couplées clivées décrit dans l'article américain "1.5 µm wavelength Ga In As P C³ lasers : single-frequency operation and wide band frequency tuning" (W.T. Tsang et al) extrait de "Electronics Letters", 26 mai 1983, vol.19, n° 11, pages 415 et 416. L'émetteur laser 39 comporte deux pastilles semi-conductrices 55 et 56 d'une polarité, associées à une seule pastille 57 de polarité opposée, de manière à former deux jonctions semi-conductrices couplées. Cet émetteur laser est maintenue à une température constante de 20°C centigrade par exemple, avec une précision de 0,001°C. Il est pour cela placé dans une enceinte thermostatée 41 comportant une fenêtre 58 pour laisser passer son faisceau d'émission suivant un axe 59 vers l'isolateur 42 (figure 1). L'enceinte 41 comporte également des passages électriques pour les trois sorties électriques du laser. Cet émetteur laser est capable d'émettre un rayonnement monomode suivant une raie d'émission très fine dont la largeur est de l'ordre de un mégahertz.

Le circuit 40 comporte un circuit d'alimentation 60 branché pour polariser la jonction 55-57 de l'émetteur laser par un courant d'alimentation réglé au-dessus du seuil laser, et un circuit d'accord 61 branché pour polariser la jonction 56-57 par un courant d'accord réglable au-dessous du seuil laser. Le circuit d'alimentation 60 est relié à un circuit de modulation 62 à travers un interrupteur 63. Le circuit 62 est relié à une sortie d'un circuit à bascule 65.

L'ouverture et la fermeture de l'interrupteur 63 est commandée par un circuit de commutation 64 relié à une autre sortie du circuit 65. Une autre sortie du circuit 65 est reliée au circuit 61 à travers un circuit de réglage 66. Enfin l'entrée du circuit 65 est reliée à la sortie 38 (voir figure 1) de l'ordinateur 37.

Le courant d'alimentation délivré par le circuit 60 est réglé une fois pour toute, avec une précision de 0,001°C. Dès que l'ordinateur 37 reçoit les signaux d'appel provenant du poste 1, il place le circuit à bascule 65 sur une première position. Le circuit 65 commande alors le circuit de réglage 66 de façon à régler le courant d'accord délivré par le circuit 61 à une valeur telle que la fréquence optique émise par l'émetteur laser 39 est égale à la fréquence $f_A$ réservée aux liaisons entre le standard et les différents postes. Par ailleurs le circuit 65 commande par l'intermédiaire du circuit 64 la fermeture de l'interrupteur 63. Le circuit 62 délivre alors des signaux électriques représentatifs de la fréquence $f_c$ désignée par l'ordinateur. Ces signaux modulent le courant d'alimentation de l'émetteur laser est provoquent ainsi une modulation correspondante de l'intensité du rayonnement laser délivré par l'émetteur laser. Ce rayonnement modulé est transmis à travers l'isolateur 42 par le fibre 8 et le détecteur 9 à l'entrée du circuit de réglage 13 du poste 1.

L'isolateur 42 ainsi que les autres isolateurs du dispositif autorisent la transmission des signaux optiques dans un sens, mais bloquent toute transmission optique en sens inverse. De tels isolateurs, bien connus par l'homme du métier, sont utilisés pour éviter que le fonctionnement d'un laser ne soit perturbé par des émissions se propageant en sens inverse.

Le circuit de réglage 13 reçoit donc l'information de la fréquence $f_c$ désignée par l'ordinateur et agit sur le circuit d'alimentation 5 de façon que l'émission du générateur laser 4 qui était réglée sur la fréquence $f_A$ soit réglée sur une bande de fréquence contenant la fréquence désignée $f_c$. L'émission du générateur laser 4 est transmise par la fibre 8 au standard 32. Dès que les signaux d'appel n'arrivent plus sur l'entrée 36 de l'ordinateur, celui-ci commande le basculement du circuit 65 sur une deuxième position. L'interrupteur 63 est alors ouvert et le circuit 66 règle le courant d'accord délivré par le circuit 61 de façon que la fréquence d'émission de l'émetteur laser 39 soit exactement égale à la fréquence $f_c$ désignée par l'ordinateur. Rappelons que le rayonnement délivré par l'émetteur laser 39 est monomode et que sa largeur de bande est très étroite et de l'ordre de un mégahertz. Ce rayonnement est injecté par la fibre 8 dans la cavité du générateur laser 4. L'émission du générateur laser 4 est ainsi "verrouillée" sur celle de l'émetteur laser 39, c'est-à-dire que l'émission du générateur laser 4 se trouve ainsi réglée exactement sur la même fréquence que celle du rayonnement de l'émetteur laser 39, avec un largeur de raie identique. Ce phénomène de verrouillage est décrit dans l'article "Injection locking characteristics of an Al Ga As semi conductor laser" (S.Kobayaski et al) extrait de "IEEE Journal of quantum electronics" vol.QE16, n° 9, septembre 1980, pages 915 à 917.

Le générateur laser 4 se trouve ainsi prêt à émettre, vers le répartiteur optique 31 à travers l'isolateur 29 et la fibre 16, un rayonnement sur une fréquence porteuse $f_c$ définie de façon très précise ; ce rayonnement est modulé par les signaux électriques d'émission délivrés par le circuit 3 suivant une bande de fréquence de faible largeur, de l'ordre de 10 mégahertz pour former un message destiné au titulaire du poste 2.

L'oscillateur local 17 du poste 1 est un laser à semi-conducteur de type courant, capable d'émettre un rayonnement multimode. De préférence, l'oscillateur local 17 est choisi de façon que ses bandes de fréquence d'émission aient une largeur beaucoup plus faible que celle des bandes de fréquence du générateur laser 4. Le dispositif de stabilisation de température 20 qui est associé à l'oscillateur local 17 permet de maintenir sa température à une valeur par exemple égale à 20°C avec une précision de 0,05°C. Dès que le circuit de réglage 13 reçoit l'information de la fréquence $f_c$ désignée par l'ordinateur, il la transmet au circuit d'asservissement 21. Celui-ci permet, grâce au discriminateur de fréquence 22, d'asservir la fréquence d'émission de l'oscillateur local 17 à une fréquence très proche de la fréquence $f_c$ désignée par l'ordinateur et émise par le générateur laser 4 du poste 1. Pour cela, le discriminateur de fréquence 22, qui est un filtre à bande étroite, est réglé sur une différence de fréquence d faible par rapport à l'écart entre deux fréquences successives de la liste prédéterminée de fréquences dans laquelle l'ordinateur a choisi la fréquence $f_c$. L'oscillateur local 17 se trouve ainsi réglé sur une fréquence $f_D = f_c + d$, et son rayonnement illumine la surface optique de réception du récepteur 15.

D'une manière analogue, l'ordinateur 37 transmet au poste 2 par les éléments 50, 49, 52 et la fibre 108 l'information de la fréquence $f_c$ désignée par l'ordinateur. Dans le poste 2, cette information est transmise au circuit de réglage 113 par les éléments 109, 112 et 111. Le circuit d'alarme 114 est mis en fonctionnement. Le titulaire du poste 2 ferme l'interrupteur 154, ce qui arrête le fonctionnement du circuit d'alarme 114. L'émission du générateur 104 est réglée puis verrouillé sur la fréquence $f_c$ et l'émission de l'oscillateur local 117 est réglée à la fréquence $f_D$.

Le dispositif représenté sur la figure 1 est alors prêt pour une communication entre les postes 1 et 2. Les signaux d'émission modulant l'onde d'émission du poste 1 sont reçus à travers la fibre 16 dans le répartiteur optique 31. La fibre 116 canalise une partie de l'énergie de l'onde d'émission, cette partie étant reçue par le détecteur 115. Celui-ci fonctionne en détection hétérodyne et délivre une onde électrique de fréquence $d = f_D - f_c$ modulée par les signaux d'émission du poste 1. Le circuit de décodage 126 délivre les signaux d'émission au circuit de réception 127. De même, les signaux d'émission modulant l'onde d'émission du poste 2 sont reçus à travers la fibre 116 par le répartiteur optique passif 31. Une partie de l'énergie de cette onde canalisée par la fibre 16 est reçue par le récepteur 15 qui fonctione en détection hétérodyne. Le circuit de décodage 26 reçoit une onde électrique de fréquence d modulée par les signaux d'émission du poste 2. Le circuit 26 délivre ces signaux d'émission au circuit de réception 27.

Le dispositif de télécommunicaton décrit ci-dessus peut fonctionner avec une plage globale d'émission de l'ordre de quelques nanomètres, soit environ 1000 GHz au voisinage d'une longueur d'onde de 1550 nanomètres. Il est ainsi possible d'envisager au moins 1000 canaux d'émission, soit environ 1000 communications simultanées. On peut aussi appliquer ce dispositif à un système de transmissions cohérentes d'images vidéo à 100 Mbits/s, avec une dynamique globale de 60 à 70dB. La puissance optique nécessaire au verrouillage de la fréquence d'un laser semi-conducteur étant de l'ordre de $10^{-6}$ à $10^{-5}$ W, des liaisons entre abonnés de longueurs supérieures à 200 km sans répéteurs peuvent être envisagées.

Le dispositif de télécommunication selon l'invention présente l'avantage de simplifier l'équipement des postes d'abonnés en concentrant les composants délicats dans le standard où les conditions de qualité d'environnement et de facilité de maintenance sont remplies plus facilement que chez l'abonné.

## Revendications

1. Dispositif de télécommunications photoniques cohérentes, comportant
- N postes d'abonnés, comprenant chacun
    - un circuit émetteur capable de délivrer des signaux électriques d'émission,
    - un circuit d'appel capable de délivrer des signaux électriques d'appel des autres postes,
    - un générateur laser à semi-conducteur, capable de délivrer une onde optique d'émission,
    - un circuit d'alimentation électrique connecté à l'entrée du générateur laser, le circuit d'appel et le circuit émetteur étant reliés au circuit d'alimentation pour moduler l'onde optique d'émission respectivement par les signaux d'appel et les signaux d'émission,
    - un récepteur photoélectrique
    - et un circuit d'utilisation relié à la sortie électrique du récepteur,
- un répartiteur optique passif constitué par une matière transparente aux ondes optiques d'émission
- et N couples de fibres optiques reliés respectivement aux N postes, chaque couple relié à un poste comprenant une fibre optique reliée par une de ses extrémités à la sortie du générateur laser, et une autre fibre optique reliée par une de ses extrémités à l'entrée optique du récepteur photoélectrique et par son autre extrémité au répartiteur optique passif,
caractérisé en ce que, la fibre optique reliée au générateur laser étant une fibre de commande (8) et l'autre fibre optique étant une fibre de communication (16),
- chaque poste (1) comporte
    - des moyens (6) pour maintenir la température du générateur laser (4) à une valeur fixe prédéterminée,
    - un détecteur photoélectrique (9) dont l'entrée optique est reliée à la fibre de commande (8)
    - et un circuit de réglage (13) dont l'entrée est reliée à la sortie électrique du détecteur photoélectrique et dont une sortie est reliée au circuit d'alimentation (5) du générateur laser (4), le circuit de réglage (13) étant capable, lorsqu'il ne reçoit aucun signal sur son entrée, de régler le courant d'alimentation du générateur laser (4) de façon que l'onde optique d'émission ait une fréquence optique $f_A$, le circuit d'appel (7) permettant de moduler l'onde optique d'émission de fréquence $f_A$ par les signaux d'appel d'un autre poste,
- le dispositif comporte en outre un standard (32) comprenant,
    - N détecteurs photoélectriques (33) reliés respectivement aux N postes (1) par les autres extrémités des N fibres optiques de commande (8), pour recevoir les ondes optiques d'émission modulées par les signaux d'appel,
    - un ordinateur (37) relié aux sorties électriques des N détecteurs (33) de façon à recevoir les signaux d'appel provenant des différents postes (1), cet ordinateur (37) étant capable de désigner, pour chaque communication demandée entre un poste appelant (1) et un poste appelé (2), une fréquence optique $f_c$ disponible au moment de l'appel, choisie dans une liste prédéterminée de fréquences séparées l'une de l'autre par un intervalle de fréquence constant
    - et N émetteurs laser monomodes (39) dont les sorties sont reliées optiquement aux N fibres de commande (8) provenant des N postes (1), chaque émetteur (39), étant muni de deux cavités couplées et étant disposé dans une enceinte (41) maintenue à température constante, l'entrée électrique de chaque émetteur laser étant reliée à l'ordinateur à travers un circuit de commande (40), ce circuit (40) étant capable, lorsque le poste (1) relié à cet émetteur laser (39) n'est pas en communication avec un autre poste, de régler la fréquence optique de l'émetteur laser (39) à la valeur $f_A$, cette valeur étant réservée aux relations entre le standard (32) et les N postes (1), les circuits de commande (40) étant capables, lorsqu'une communication est demandée, de moduler la fréquence $f_A$ des émetteurs laser (39, 49) reliés aux postes appelant (1) et appelé (2) par des signaux représentatifs de la fréquence $f_c$ désignée par l'ordinateur (37) pour cette communication, l'information de cette fréquence $f_c$ étant transmise par les fibres de commande (8) aux détecteurs (9, 109) et aux circuits de réglage (13, 113) des postes appelant (1) et appelé (2), ces circuits de réglage (13, 113) étant aptes à régler le courant d'alimentation des générateurs laser (4, 104) de ces postes (1, 2) de manière que la fréquence de leurs ondes optiques d'émission soit égale à $f_c$, les circuits de commande (40, 50) reliés aux postes appelant (1) et appelé (2) étant alors capables de régler à la valeur f$_c$ la fréquence des émetteurs laser (39, 49) reliés à ces postes (1, 2), de sorte que les rayonnements de fréquence f$_c$ émis par ces émetteurs laser (39, 49) et transmis par les fibres de commande (8, 108), sont injectés dans la cavité des générateurs laser (4, 104) des postes appelant (1) et appelé (2) pour verrouiller leur fréquence d'émission à la valeur f$_c$

– et chaque poste (1) comporte en outre
- des moyens (28, 29, 30) pour relier optiquement la sortie du générateur laser (4) à la fibre de communication (16), afin que cette fibre (16) puisse transmettre au répartiteur optique passif (31) l'onde optique d'émission de fréquence f$_c$ modulée par les signaux électriques d'émission,
- un oscillateur local (17) constitué par un laser à semi-conducteur mini de moyens (20) pour maintenir sa température à une valeur fixe prédéterminée,
- un circuit d'asservissement (21) relié au circuit de réglage (13) et à l'entrée électrique de l'oscillateur local (17), de façon à régler la fréquence d'émission de l'oscillateur local (17) à une valeur f$_D$ voisine de f$_c$ lorsque le circuit de réglage (13) reçoit l'information de la fréquence f$_c$ désignée par l'ordinateur (37) pour une communication de ce poste (1) avec un autre (2), la différence f$_d$-f$_c$ étant faible par rapport à l'intervalle entre deux fréquences successives de la liste prédéterminée de fréquences
- et des moyens (18, 19) pour relier optiquement la sortie de l'oscillateur local (17) à l'entrée du récepteur photoélectrique (15), de façon à former un système de détection hétérodyne apte à capter les ondes optiques d'émission reçues par le répartiteur optique passif (31) et transmises par la fibre de communication (16), la sortie électrique de ce système de détection hétérodyne étant reliée au circuit d'utilisation (27).

2. Dispositif selon la revendication 1, caractérisé en ce que chaque poste (1) comporte en outre un isolateur (29) branché en série dans la liaison entre la sortie du générateur laser (4) et la fibre optique de communication (16).

3. Dispositif selon la revendication 1, caractérisé en ce que le standard (32) comporte en outre des isolateurs (42, 52) branchés chacun en série dans la liaison entre un émetteur laser (39, 49) et la fibre optique de commande (8, 108).

4. Dispositif selon la revendication 1, caractérisé en ce que chaque poste (1) comporte un circuit d'alarme (14) relié au circuit de réglage (13).

5. Dispositif selon la revendication 1, caractérisé en ce que le circuit d'asservissement (21) de chaque poste (1) comporte un circuit de contrôle de fréquence (23) relié à l'entrée électrique de l'oscillateur local (17), un circuit d'alimentation (24) relié au circuit de contrôle de fréquence (23) et au circuit de réglage (13), et un circuit discriminateur de fréquence (22) relié au circuit de contrôle de fréquence (23) et à la sortie électrique du récepteur (15).

6. Dispositif selon la revendication 1, caractérisé en ce que chaque poste (1) comporte en outre un circuit de décodage (11) branché en série entre la sortie de son détecteur (9) et le circuit de réglage (13).

7. Dispositif selon la revendication 1, caractérisé en ce que le standard (32) comporte en outre des circuits de décodage (35, 46), chacun de ces circuits étant branché en série entre un de ses détecteurs (33) et l'ordinateur (37).

8. Dispositif selon la revendication 1, caractérisé en ce que chaque poste (1) comporte en outre un circuit de décodage (26) branché en série entre la sortie du système de détection hétérodyne et le circuit d'utilisation (27).

## Ansprüche

1. Kohärente photonische Fernmeldeeinrichtung mit :
- N Teilnehmerstationen, von denen jede aufweist :
- eine Sendeschaltung zur Lieferung elektrischer Sendesignale,
- eine Rufschaltung zur Lieferung elektrischer Signale zum Rufen anderer Stationen,
- einen Halbleiterlasergenerator, der eine Lichtwelle aussenden kann,
- eine an den Eingang des Lasergenerators angeschlossene elektrische Versorgungsschaltung, wobei die Rufschaltung und die Sendeschaltung an die Versorgungsschaltung zum Modulieren der auszusendenden Lichtwelle durch die Rufsignale bzw. die Sendesignale angeschlossen ist,
- einen lichtelektrischen Empfänger
- und eine Verbraucherschaltung, die an den elektrischen Ausgang des Empfängers angeschlossen ist,
- einen passiven Lichtverteiler, der aus einem für die auszusendende Lichtwelle durchlässigen Material besteht,
- und N Lichtleitfaserpaare, die je an eine der N Stationen angeschlossen sind, wobei jedes an eine Station angeschlossene Paar eine mit einem ihrer Enden an den Ausgang des Lasergenerators angeschlossene Lichtleitfaser und eine weitere Lichtleitfaser aufweist, die mit einem ihrer Enden an den optischen Eingang des lichtelektrischen Empfängers und mit ihrem anderen Ende an den passiven Lichtverteiler angeschlossen ist, dadurch gekennzeichnet, daß die an den Lasergenerator angeschlossene Lichtleitfaser als Steuerfaser (8) und die andere Lichtleitfaser als Nachrichtenfaser (16) dient und daß – jede Station (1) aufweist :

• Mittel (6) zum Beibehalten der Temperatur des Lasergenerators (4) auf einem vorbestimmten Festwert ;

• einen lichtelektrischen Detektor (9), dessen optischer Eingang an die Steuerfaser (8) angeschlossen ist ;

• und eine Regelschaltung (13), deren Eingang an den elektrischen Ausgang des lichtelektrischen Detektors und deren Ausgang an die Versorgungsschaltung (5) des Lasergenerators (4) angeschlossen ist, wobei die Regelschaltung (13) in der Lage ist, bei Fehlen eines Signals an ihrem Eingang den Speisestrom des Lasergenerators (4) so zu regeln, daß die auszusendende Lichtswelle eine Lichtfrequenz $f_A$ besitzt, während die Rufschaltung (7) die Modulation der auszusendenden Lichtwelle der Frequenz $f_A$ durch die Signale zum. Rufen einer anderen Station ermöglicht ;

– die Einrichtung weiter eine Schaltzentrale (32) besitzt, die aufsweist :

• N lichtelektrische Detektoren (35), die mit den anderen Enden der N Steuerlichtleitfasern (8) jeweils an die N Stationen (1) angeschlossen sind, um, die durch die Rufsignale modulierten Lichtwellen zu empfangen ;

• einen Rechner (37), der mit din elektrischen Ausgängen der N Detektoren zum Empfangen der von den verschiedenen Stationen (1) ankommenden Rufsignalen verbunden ist, wobei der Rechner (37) in der Lage ist, für jede zwischen einer rufenden Station (1) und einer gerufenen Station (2) gewünschte Nachrichtenverbindung eine im Moment des Anrufs verfügbare Lichtfrequenz $f_c$ zu bestimmen, die aus einer vorbestimmten Liste von Frequenzen ausgewählt wird, welche voneinander durch ein konstantes Frequenzintervall getrennt sind,

• und N Monomodelasersender (39), deren Ausgänge optisch mit den von den N Stationen (1) ausgehenden N Steuerfasern (8) verbunden sind, wobei jeder Sender (39) mit zwei gekoppelten Hohlräumen ausgestattet und in einem auf konstanter Temperatur gehaltenen Behältnis (41) angeordnet und der elektrische Eingang jedes Lasersenders über eine Steuerschaltung (40) an den Rechner angeschlossen ist, wobei die Schaltung (40) im Falle, daß die an den betreffenden Lasersender (39) angeschlossene Station (1) nicht mit einer anderen Station in Nachrichtenverbindung steht, in der Lage ist, die Lichtfrequenz des Lasersenders (39) auf den Wert $f_A$ abzustimmen, wobei dieser Wert für den Verkehr zwischen der Schaltzentrale (32) und den N Stationen (1) reserviert ist, während die Steuerschaltungen (40) im Falle einer gewünschten Verbindung in der Lage sind, die Frequenz $f_A$ der an die rufenden (1) und die gerufenen (2) Stationen angeschlossenen Lasersender (39, 49) mit Signalen zu modulieren, die für die vom Rechner (37) für die betreffende Verbindung bestimmte Frequenz $f_c$ repräsentativ sind und die Information über diese Frequenz $f_c$ durch die Steuerfasern (8) an die Detektoren (9, 109) und an die Regelschaltungen (13, 113) der anrufenden (1) und der angerufenen Stationen (2) übermittelt wird, wobei die Regelschaltungen (13, 113) in der Lage sind, den Speisestrom der Lasergeneratoren (4, 104) dieser Stationen (1, 2) so zu regeln, daß die Frequenz ihrer auszusendenden Lichtwellen der Frequenz $f_c$ entspricht und somit die mit der rufenden (1) und der gerufenen Station (2) verbundenen Steuerschaltungen (40, 50) die Frequenz der an diese Stationen angeschlossenen Lasersender (39, 49) auf den Wert $f_c$ abstimmen können, derart, daß die von den betreffenden Lasersendern (39, 49) ausgesandte und durch die Steuerfasern (8, 108) übertragene Strahlung der Frequenz $f_c$ in den Hohlraum der Lasergeneratoren (4, 104) der rufenden (1) und der gerufenen Stationen (2) zur Verriegelung ihrer Sendefrequenz auf den Wert $f_c$ eingeleitet werden,

– und daß jede Station (1) weiter folgende Einrichtungen aufweist :

• Mittel (28, 29, 30) zum optischen Verbinden des Ausgangs des Lasergenerators (4) mit der Nachrichtenverbindungsfaser (16), damit diese Faser (16) die Lichtwelle mit der durch die elektrischen Sendesignale modulierte Frequenz $f_c$ an den passiven Lichtverteiler (31) übertragen kann,

• einen örtlichen Oszillator (17) bestehend aus einem Halbleiterlaser mit Mitteln (20) zur Beibehaltung seiner Temperatur auf einem vorbestimmten Festwert,

• eine Nachführungsschaltung (21), die an die Regelschaltung (13) und an den elektrischen Eingang des örtlichen Oszillators (17) auf einen nahe bei $f_o$ gelegenen Wert $f_D$ eingestellt wird, wenn die Regelschaltung (37) die Information über die vom Rechner (37) bestimmte Frequenz $f_c$ für eine Nachrichtenverbindung der betreffenden Station (1) mit einer anderen Station (2) empfängt, wobei die Differenz $f_d - f_c$ klein im Vergleich zum Intervall zwischen zwei aufeinanderfolgenden Frequenzen der vorbestimmten Liste der Frequenzen ist,

• und Mittel (18, 19), zum optischen Verbinden des Ausgangs des örtlichen Oszillators (17) mit dem Eingang des lichtelectrischen Empfängers (15) derart, daß ein Überlagerungsdetektionssystem geschaffen wird, welches die vom, passiven Lichtverteiler (31) empfangenen und von der Nachrichtenverbindungsfaser (16) übertragenen Lichtwellen auffangen kann, wobei der electrische Ausgang dieses Überlagerungsdetektionssystems an die Verbraucherschaltung (27) angeschlossen ist.

2. Einrichtung nach Anspruch 1, dadurch gekennzeichnet, daß jede Station (1) weiter einen Isolator (29) aufweist, der in Reihe in die Verbindung zwischen den Ausgang des Lasergenerators (4) und die Verbindungslichtleitfaser (16) eingefügt ist.

3. Einrichtung nach Anspruch 1, dadurch gekennzeichnet, daß die Schaltzentrale (32) weiter Isolatoren (42, 52) aufweist, die jeweils in Reihe in die Verbindung zwischen den Lasergenerator (39, 49) und die Steuerlichtleitfaser (8, 108) eingefügt sind.

4. Einrichtung nach Anspruch 1, dadurch gekennzeichnet, daß jede Station (1) eine Alarmschaltung (14) aufweist, die mit der Regelschaltung (13) verbunden ist.

5. Einrichtung nach Anspruch 1, dadurch gekennzeichnet, daß die Nachführungsschaltung (21) jeder Station (1) eine Frequenzsteuerschaltung (23), die an den elektrischen Eingang des örtlichen Oszillators (17) angeschlossen ist, eine Versorgungsschaltung (24), die an die Frequenzsteuerschaltung (23) und an die Regelschaltung (13) angeschlossen ist, und eine Frequenzdiskriminationsschaltung (22) aufweist, die an die Frequenzsteuerschaltung (23) und an den elektrischen Ausgang des Empfängers (15) angeschlossen ist.

6. Einrichtung nach Anspruch 1, dadurch gekennzeichnet, daß jede Station (1) weiter eine Entschlüsselungsschaltung (11) aufweist, die in Reihe zwischen den Ausgang ihres Detektors (9) und die Regelschaltung (31) eingefügt ist.

7. Einrichtung nach Anspruch 1, dadurch gekennzeichnet, daß die Schaltzentrale (32) weiter eine Entschlüsselungsschaltung (35, 46) aufweist, wobei jede dieser Schaltungen in Reihe zwischen einen ihrer Detektoren (33) und den Rechner (37) eingefügt ist.

8. Einrichtung nach Anspruch 1, dadurch gekennzeichnet, daß jede Station weiter eine Entschlüsselungsschaltung (26) aufweist, die in Reihe zwischen den Ausgang des Überlagerungsdetektionssystems und die Verbraucherschaltung (27) eingefügt ist.

Claims

1. A coherent telecommunications system comprising
  – N subscriber stations, each comprising
    • a transmitter circuit operable to deliver electric transmit signals,
    • a calling station operable to deliver electric signals for calling other stations,
    • a semiconductor laser generator, operable to deliver an optical transmit wave,
    • an electrical power supply circuit connected to the input of the laser generator, the calling circuit and the transmit circuit being connected to the power supply circuit to modulate the optical transmit wave by the calling signals and transmit signals respectively,
    • a photoelectric receiver,
    • and a utilization circuit connected to the electrical output of the receiver,
  – a passive optical distributor consisting of a material transparent to the transmit optical waves,
  – and N pairs of optical fibers respectively connected to the N subscriber stations, each pair connected to a station comprising an optical fiber having one end thereof connected to the output of the laser and another optical fiber having one end thereof connected to the optical input of the photoelectric receiver and the other end thereof connected to the passive optical distributor, characterized in that, the optical fiber connected to the laser being a control fiber (8) and the other optical fiber being a communications fiber (16),
  – each subscriber station (1) comprises :
    • means (6) for maintaining the temperature of the laser source (4) at a predetermined fixed value,
    • a photoelectric detector (9) the optical input whereof is connected to the control fiber (8),
    • and a tuning circuit (13) the input whereof is connected to the electrical output of the photoelectric detector and one output whereof is connected to the laser (4) power supply circuit (5), said tuning circuit (13) being operable, when no signals are received at its input, to adjust the supply current to the laser (4) to set the transmit optical wave to an optical frequency $f_A$, the calling circuit (7) enabling modulation of the transmit optical wave of frequency $f_A$ by the calling signals from another station,
  – wherein a switching exchange (32) is provided, comprising
    • N photoelectric detectors (35) connected respectively to the N subscriber stations (1) by the other ends of the N optical control fibers (8), to receive the transmit optical waves modulated by the calling signals,

- a computer (37) connected to the electrical outputs of the N detectors to receive the calling signals coming from the various stations (1), said computer (37) being operable to assign, for each call asked for between a calling station (2) and a called station (1), an optical frequency $f_c$ available at the time of the call, selected from a predetermined list of frequencies separated from one another by a constant frequency interval,
- and N single-mode laser transmitters (39) whose outputs are optically connected to the N fibers (8) coming from the N stations (1), each transmitter being equipped with two coupled cavities and disposed in a constant-temperature enclosure (41), the electrical input of each laser transmitter being connected to the computer via a control circuit (40), said control circuit (40) being operable when the station (1) connected to same transmitter (39) is not callingly engaged with another station, to tune the optical frequency of the laser transmitter (39) to the value $f_A$, which value is reserved for communications between the exchange (32) and the N stations (1), the control circuits (40) being operable, when a call is asked for or initiated, to modulate the frequency $f_A$ of the laser transmitters (39, 49) connected to the calling (1) and called stations (2) by signals representative of the frequency $f_c$ assigned by the computer (37) for same call, the specific $f_c$ frequency data being transmitted along the control fibers (8) to the detector (9, 109) and the tuning circuits (13, 113) of the calling (1) and called stations (2), said tuning circuits (13, 113) being operable to adjust the supply currents to the lasers (4, 104) of said stations (1, 2) such that the frequency of their transmit optical waves will be equal to $f_c$, the control circuits (40, 50) connected to the calling (1) and called stations (2) then being operable to adjust the frequency of the laser transmitters (39, 49) connected to same to the value $f_c$, such that the radiant energy at frequency $f_c$ emitted by said transmitters (39, 49) and transmitted through the control fibers (8, 108) are injected into the cavity of the lasers (4, 104) of the calling (1) and called stations (2) to lock their transmit frequency at the frequency $f_c$,

- and wherein each station (1) further comprises:
  - means (28, 29, 30) for optically connecting the output of the laser (4) to the communications fiber (16), so that said fiber can transmit to the passive optical distributor (31) the transmit optical wave of frequency $f_c$ modulated by the transmit electric signals,
  - a local oscillator (17) constituted of a semiconductor laser provided with means (20) for maintaining its temperature at a predetermined fixed value,
  - a sequential circuit (21) connected to the tuning circuit (13) and to the electrical input of the local oscillator (17), so that it tunes the output frequency of the local oscillator to a value $f_D$ close to $f_c$ when the tuning circuit (37) receives the computer (37) assigned frequency $f_c$ information for a call between the concerned station (1) and any other station (2), the difference $f_D-f_c$ being small compared to the interval between two successive frequencies in the list of predetermined frequencies,
  - and means (18, 19) for optically connecting the output of the local oscillator (17) with the input to the photoelectric receiver (15), such as to form a heterodyne detection system capable of capturing the transmit optical waves received by the passive optical distributor (31) and transmitted along the communications fiber, the electrical output of said heterodyne detection system being connected to the utilization circuit (27).

2. A system as claimed in claim 1, characterized in that each station (1) furthermore comprises an isolator (29) connected in series in the link between the laser (4) output and the communications fiber (16).

3. A system as claimed in claim 1, characterized in that the switching exchange (32) is further provided with isolators (42, 52) each connected in series between a laser (39, 49) and the control fiber (8, 108).

4. A system as claimed in claim 1, characterized in that each station comprises an alarm circuit connected to the tuning circuit (13).

5. A system as claimed in claim 1, characterized in that the control circuit (21) for each station (1) comprises a frequency control circuit (23) connected to the local oscillator (17) electrical input, a power supply circuit (24) connected to the frequency control circuit (23) and to the tuning circuit (13), and a frequency discrimination circuit (22) connected to the frequency control circuit (23) and to the electrical output of the receiver (15).

6. a system as claimed in claim 1, characterized in that each station further comprises a decoding circuit series (11) connected between the output of its detector (9) and the tuning circuit (31).

7. A system as claimed in claim 1, characterized in that the switching exchange (32) further comprises decoding circuits (35, 46), each of is connected in series between one of its detectors (33) and the computer (37).

8. A system as in claim 1, characterized in that each station further comprises a decoding circuit (26) connected in series between the output of the heterodyne detection system and the utilization circuit

(27).

FIG.1

EP 0 231 015 B1

# FIG. 2